# EUROPEAN PATENT SPECIFICATION

(11) **EP 0 441 343 B1**
(45) Date of publication and mention of the grant of the patent: **14.06.1995**
(21) Application number: 91101609.5
(22) Date of filing: 06.02.1991
(51) Int. Cl.: B60T 8/36, B60T 8/50

(54) **Fluid pressure controller**
Fluiddruckregler
Appareil de commande de pression de fluide

(30) Priority: 09.02.1990 JP 29828/90
(43) Date of publication of application: 14.08.1991
(73) Proprietor: SUMITOMO ELECTRIC INDUSTRIES, LTD., Osaka-shi, Osaka 541 (JP)
(72) Inventor: Takata, Koji, 1-1, Koyakita 1-chome, Itami-shi, Hyogo (JP); Hashida, Koichi, 1-1, Koyakita 1-chome, Itami-shi, Hyogo (JP)
(74) Representative: Glawe, Delfs, Moll & Partner

(56) References cited:
- EP-A- 0 369 412
- WO-A-80/01783
- FR-A- 1 048 355
- GB-A- 959 691
- JP-A- 2 038 175

## Description

This invention relates to an electromagnetically generated differential pressure controlled variable-flow control valve especially suitable for use in a brake device for an automobile among various fluid pressure systems. More specifically, this invention relates to a control valve which can bypass the flow when a large flow is required and which can control the rising or falling speed of pressure (flow rate in a strict sense) to a value corresponding to the magnitude of electric command in a small-flow region.

A flow control valve comprising a housing having a first port and a second port, a plunger, first and second chambers defined by both ends of said plunger and said housing, means for imparting an axial driving force to said plunger, a variable-size orifice for controlling communication between said first chamber and said first port, a passage for keeping said second chamber in communication with said second port, and a fixed-size orifice provided in a passage connecting said first and second chambers, is widely known as pressure compensated flow control valve. In order to control the flow rate of this type of flow control valve, one method which is widely known is to make the opening of the fixed-size orifice controllable according to the electric signal. Another method is to make the axial driving force controllable according to the electric signal.

A flow control valve with controllable driving force is known in JP-A-02 038175. In this prior art, the driving force balances the output pressure.

This document discloses a variable-flow control valve comprising a housing having a first port and a second port, a plunger axially slidably mounted in said housing, first and second chambers defined by both ends of said plunger and said housing, an electricity/power converter for imparting to said plunger an axial driving force corresponding to the magnitude of electric command, a spring for holding said plunger in its initial position when the value of electric command to said converter is zero, and a passage connecting said first and second chambers.

A variable-flow control valve in which the driving force corresponds to the flow rate has been proposed in EP 0 369 412 (which was not yet published at the date of filing of this invention) by the present applicant. In EP 0 369 412, a differential pressure corresponding to the magnitude of electric command is maintained through the same mechanism of the variable-size orifice defined by the shoulder portion formed on the plunger as in the popular pressure compensated flow control valve mentioned above.

A fixed-size orifice is formed in a passage for keeping both chambers in communication with each other to control the flow rate according to the differential pressure. Further a bypass is formed which is adapted to be opened if the required flow rate is larger than the threshold value which is determined to a lower value than the value which an electricity/power converter can attain by generating its maximum output.

Fig. 3 shows an example of a device according to EP 0 369 412 of this type which has a housing 11, a plunger 12, an input port 13, a peripheral passage 14, a fixed-size orifice 15, an output port 16, a discharge port 17, a spring 18, a driver 19 and an electricity/power converter 20. It also has a bypass 23 for pressure increase and a bypass 24 for pressure reduction. The bypass 23 performs its function when its elements 23a, 23b and 23c communicate with one another whereas the bypass 24 does when its elements 24a and 24b communicate with each other.

With the device disclosed in the above-mentioned application (EP 0 369 412), the bypasses are opened by an overstroke of the plunger. Thus, an extra stroke is required for the electricity/power converter. But if the bypasses are formed in the plunger itself, the length of the extra stroke has to be increased further to restrain the fluid leakage at the outer periphery of the plunger.

An object of this invention is to provide an electromagnetically generated differential pressure controlled variable-flow control valve having bypasses which obviates the abovesaid shortcomings and which requires no extra stroke to the electricity/power converter.

This object is achieved by an electromagnetically generated differential pressure controlled variable-flow control valve according to claim 1. The further claims being related to different embodiments of the present invention.

According to this invention, in a variable-flow control valve in which a differential pressure corresponding to the magnitude of electric command is generated between the first and second chambers formed at both ends of the plunger to control the flow rate with the fixed-size orifice provided in a passage through which both chambers communicate with each other, a relief valve for bypass is provided in the passage in parallel with a passage having the fixed-size orifice. The relief valve is adapted to be opened when the required flow rate reaches its threshold value which is determined to be slightly lower than the value corresponding to the maximum output of the electricity/power converter, by the differential pressure between the first and second chambers which corresponds to the required flow rate.

The structure which characterizes this invention can be applied to both one-way type controller for pressure increase only or pressure reduction only and for a two-way type variable-flow control valve for both pressure increase and pressure reduction. A two-way type variable-flow control valve may be provided with only one of the relief valve, for pressure increase or reduction.

By the provision of the relief valve in a bypass, no overstroke of the plunger is necessary. Thus no extra stroke for ensuring liquid-tightness is necessary. This serves to shorten the stroke required for the electricity/power converter.

Further, in the arrangement wherein the bypasses are opened by use of the overstroke of the plunger, a plurality of such bypasses have to be formed in the high-precision parts, i.e. the spool and the guide surface in the housing accommodating the spool This will lead to an increase in the production cost. The relief valve will serve to obviate this shortcoming.

This type of variable-flow control valves have excellent properties in that hydraulic shock, which causes noise and vibrations, can be reduced to a negligible level and that a precise feedback control is possible since the hydraulic vibration is not reflected in the measurements of the output fluid pressure.

But the structure disclosed in EP 0 369 412 having no bypass was used in a rather limited range of application because of a greater size of the electricity/power converter or a narrow flow control range. Even if a bypass is added to this structure, it is impossible to avoid increase in the stroke of the electricity/power converter if the bypass has to be opened by the overstroke of the plunger.

According to this invention, during the transition period where a large flow is required, any excess flow above the threshold determined by the capacity of the electricity/power converter is supplied through the bypass. In the small-flow region where a smooth control is required, the merit of the variable-flow control valve is fully used. Thus the variable-flow control valve according to this invention is compact and inexpensive and can be used in a wider range of industrial field where electronic fluid pressure control is necessary.

Other features and objects of the present invention will become apparent from the following description taken with reference to the accompanying drawings, in which:
Fig. 1 is a schematic sectional view of one embodiment of this invention;
Fig. 2 is a schematic sectional view of another embodiment; and
Fig. 3 is a sectional view of a device according to EP 0 369 412.

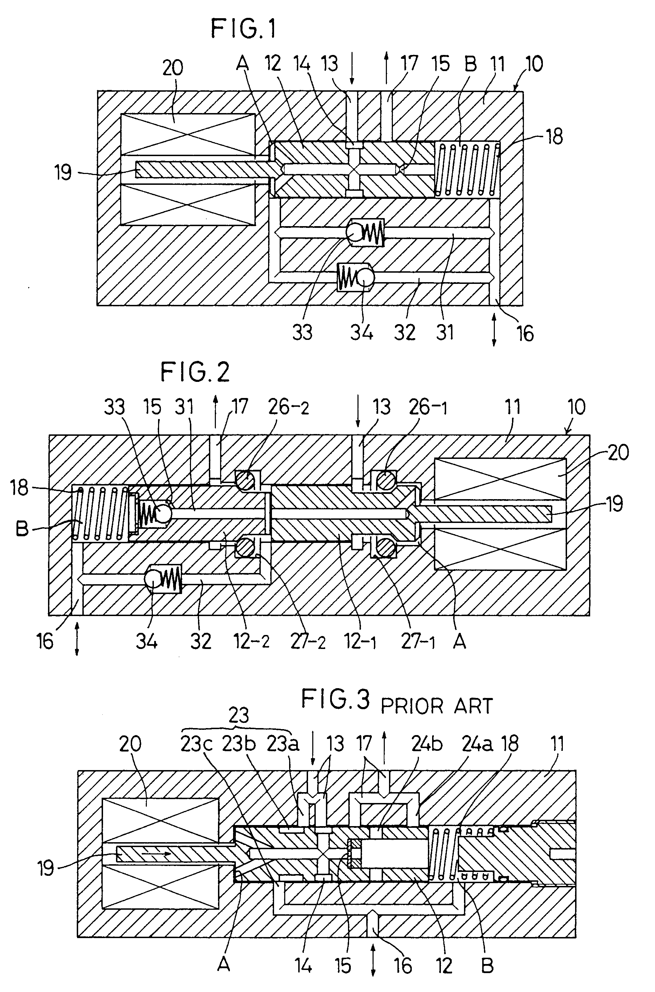

The first and second embodiments shown in Figs. 1 and 2 have the same function as the device according to EP 0 369 412 shown in Fig. 3 for comparison purposes. Further, to facilitate understanding, they are shown schematically.

In Fig. 1, a variable-flow control valve 10 comprises a housing 11 having an input port 13, a discharge port 17 and an output port 16, and a plunger 12 axially movably mounted in the housing 11.

A first chamber A is defined by one end of the plunger 12 and the housing 11 whereas a second chamber B is defined by the other end of the plunger and the housing so as to communicate with the output port 16. The plunger 12 is formed with an internal passage for fluid communication between the chambers A and B through a fixed-size orifice 15, and a peripheral passage 14 communicating with the internal passage at a point between the fixed-size orifice 15 and the chamber A to the outer peripheral surface of the plunger.

The variable-flow control valve is further provided with an electricity/power converter 20 for driving the plunger 12 and a spring 18 for keeping the plunger in its initial position when the output of the electricity/power converter is zero.

Further, passages 31 and 32 including relief valves 33 and 34, respectively, extend between the first and second chambers A and B in parallel with the passage including the fixed-size orifice 15. This is the main characterizing feature of the present invention. The passages 31 and the valve 33 are for pressure increase while the passage 32 and the valve 34 are for pressure reduction.

In this arrangement, the flow rate through the variable-flow control valve, i.e. the flow rate through the fixed-size orifice, is determined by the differential pressure between both ends of the fixed-size orifice 15, that is, the differential pressure between the chambers A and B. The differential pressure is in turn determined by the difference between the output of the electricity/power converter 20 and the force of the spring 18.

The plunger 12 moves automatically so as to adjust the degree of opening of a variable-size orifice formed between the peripheral surface 14 and the input port 13 or between the former and the discharge port 17 to maintain the fluid pressure differential between the chambers A and B, because if the plunger 12 moves to widen the opening of the variable-size orifice, it increases the flow rate between the port 13 and the chambers A, and that increases the differential pressure between the chambers A and B and moves plunger 12 backward, and that backward movement narrows the opening of the variable-size orifice, and vice versa.

Thus, the controlled flow rate corresponds to the magnitude of electric command given to the electricity/power converter. But since the electricity/power converter has a limited capacity, the differential pressure attainable with the converter and thus the flow rate through the fixed-size orifice are limited.

The relief valves 33 and 34 have a relief pressure preset to a slightly smaller value than the above-described maximum attainable differential pressure.

Thus, when the differential pressure corresponding to the required flow rate exceeds the predetermined relief pressure, one of the relief valves will open, thus allowing the fluid to flow from the input port to the output port or from the output port to the discharge port through the passage 31 or 32 for bypassing the fixed-size orifice 15. Thus the fluid pressure at the output side can be increased or decreased quickly. While the bypass 31 or 32 is open, the flow control function of the fixed-size orifice is lost. But this function will be recovered as soon as the differential pressure becomes below the relief pressure.

Thus, there is no difference in function between the variable-flow control valve according to the present invention and the prior art variable-flow control valve. But as is readily apparent by comparing Fig. 1 with Fig. 3, in this embodiment, expensive additional machining on the plunger and its mating surface is eliminated by providing the inexpensive relief valves. Further, the stroke required to the electricity/power converter is considerably shortened.

In order to further reduce the size of the entire device, it is desirable to form the relief valves inside the plunger. In this case, at least part of the bypasses is used in common with the internal passage.

The fixed-size orifice 15 may be provided in parallel with the relief valves or as shown in Fig. 2, it may be formed by imperfectly sealing the seat of one of the relief valves on purpose (e.g. by forming a cutout in the seat).

It is possible to provide either the relief valve for pressure increase or that for pressure reduction in the plunger. But it would be impossible from a manufacturing viewpoint to provide both relief valves in the plunger because they have to be provided in parallel to each other. Thus, one of the relief valves will have to be provided outside the plunger. Since one of the passages with relief valves has to be provided outside the plunger, it may be advantageous to provide the fixed-size orifice and the internal passage including it outside the plunger, too. This is especially true in case the spool diameter is reduced to reduce the size of the electricity/power converter. These variations are possible because functionally the fixed-size orifice and the passages with relief valves are only required to extend parallel with each other to communicate the chambers A and B.

Fig. 2 shows the second embodiment in which the sleeve is made up of two sections 12-1 and 12-2 and ring valve members 26-1 and 26-2 are mounted on the sleeve sections 12-1 and 12-2, respectively, to form variable-size orifices between the ring valve members and shoulders formed on the sleeve sections. In this embodiment, one of the bypass having a relief valve is provided outside the sleeve and the other relief valve is provided in one of the sleeve sections.

According to this invention, the initial position when not activated can be preset to any of the position for pressure increase, the Position for pressure hold (both closed) and the position for pressure reduction by changing the arrangement of the spring 18 and the characteristics of the electricity/power converter 20.

For example, in both the embodiments shown in Figs. 1 and 2, the initial position when not activated is the position for pressure increase. But by setting the position of the plunger when not activated so that the peripheral passage 14 communicates with the discharge port 17, the initial position can be set at the position for pressure reduction. Also, when the plunger position when not activated is set so that the peripheral passage 14 communicates with neither the input port 13 nor the discharge port 17, the initial position will correspond to the position for pressure hold.

In the embodiments, the variable-flow control valves are shown to have both the bypass for pressure increase and the bypass for pressure reduction. But if one of them is not necessary, it may be omitted.

Also, both embodiments show variable-flow control valves operable in both ways. But a one-way type variable-flow control valve for either pressure increase only or pressure reduction only is possible simply by removing either the port 13, relief valve 33 and associated parts, or instead, the port 17, relief valve 34 and associated parts. In the former case, the port 16 is for higher pressure and the port 17 is for lower pressure whereas in the latter case, the port 13 is for higher pressure and the port 16 for lower pressure.

Further, any other conventional design feature may be added. For example, any of the parts may be divided for easy assembly, a groove for fluid communication may be formed in the plunger or a spring force adjusting means may be provided.

## Claims

1. An electromagnetically generated differential pressure controlled variable-flow control valve (10) comprising a housing (11) having a first port (13) and a second port (16), a plunger (12) axially slidably mounted in said housing (11), first (A) and second (B) chambers defined by both ends of said plunger (12) and said housing (11), an electricity/power converter (20) for imparting to said plunger (12) an axial driving force corresponding to the magnitude of electric command, a spring (18) for holding said plunger (12) in its initial position when the value of electric command to said converter (20) is zero, a variable-size orifice for controlling communication between said first chamber (A) and said first port (13), a first passage for keeping said second chamber (B) in communication with said second port (16), a second passage connecting said first (A) and second (B) chambers containing a fixed-size orifice (15) through which a lower pressure is introduced in service into one of the first (A) and second (B) chambers than into the other,
wherein said variable-size orifice is provided to be narrowed by the axial movement of said plunger (12) enlarging said one of said first (A) and second (B) chambers in which a higher pressure is introduced,
wherein the flow rate through the valve (10) corresponds to a differential pressure between both sides of said fixed-size orifice (15), namely that between said first (A) and second (B) chambers, and said differential pressure corresponds to the output of said electricity/power converter (20), and
wherein another third passage (31) containing a first relief valve (33) also connects said first (A) and second (B) chambers and when the said differential pressure is smaller than the relief pressure of said first relief valve (33), the flow rate is controlled by said fixed-size orifice so as to correspond to said differential pressure and when said differential pressure exceeds the relief pressure of said first relief valve (33) a bypass parallel to said fixed-size orifice (15) is formed between said first chamber (A) and said second chamber (B) through said first relief valve (33).

2. An electromagnetically generated differential pressure controlled variable-flow control valve as claimed in claim 1, further comprising a third port (17) in the housing (11), another variable-size orifice for controlling communication between said first chamber (A) and said third port (17), another fourth passage (32) connecting said first (A) and second (B) chambers containing a second relief valve (34) opening in a opposite direction as said first relief valve (33), said another variable-size orifice and said second relief valve (34) control the flow rate between said second port (16) and said third port (17) when the axial driving force is imparted in the reverse direction by said electricity/power converter (20).

3. An electromagnetically generated differential pressure controlled variable-flow control valve (10) as claimed in claim 1 or 2, wherein said third passage (31) connecting said first (A) and second (B) chambers is formed through said plunger (12), said fixed-size orifice (15) being provided in said third of said passages.

4. An electromagnetically generated differential pressure controlled variable-flow control valve (10) as claimed in claim 3, wherein said first relief valve (33) is provided in said third passage (31) together with said fixed-size orifice (15).

5. An electromagnetically generated differential pressure controlled variable-flow control valve (10) as claimed in claim 4, wherein said first relief valve (33) has a valve seat having an imperfectly sealed portion for use as said fixed-size orifice (15).

## Patentansprüche

1. Ventil (10) zur Steuerung eines veränderlichen Durchflusses, das mit einem elektromagnetisch erzeugten Differenzdruck gesteuert wird, mit einem Gehäuse (11) mit einer ersten Öffnung (13) und einer zweiten Öffnung (16), einem in dem Gehäuse (11) axial gleitend gelagerten Druckkolben (12), einer ersten (A) und einer zweiten (B) Kammer, die durch die beiden Enden des Druckkolbens (12) und das Gehäuse (11) festgelegt sind, einem Elektrizität/Leistung-Wandler (20) zur Beaufschlagung des Druckkolbens (12) mit einer der Größe der elektrischen Ansteuerung entsprechenden axialen Antriebskraft, einer Feder (18) zum Halten des Druckkolbens (12) in seiner Ausgangsstellung, wenn der Wert der elektrischen Ansteuerung an den Wandler (20) Null ist, einer Öffnung veränderlicher Größe zum Steuern der Verbindung zwischen der ersten Kammer (A) und der ersten Öffnung (13), einem ersten Durchtritt zum Aufrechterhalten der Verbindung zwischen der zweiten Kammer (B) und der zweiten Öffnung (16), einem die erste (A) und die zweite (B) Kammer verbindenden zweiten Durchtritt, der eine Öffnung (15) mit fester Größe enthält, durch die beim Betrieb in die erste (A) oder zweite (B) Kammer ein geringerer Druck als in die andere eingeleitet wird,
wobei die Öffnung mit veränderlicher Größe so ausgelegt ist, daß sie durch die axiale Bewegung des Druckkolbens (12) verengt wird, der die erste (A) oder zweite (B) Kammer, in die ein höherer Druck eingeführt wird, vergrößert, wobei die Durchflußgeschwindigkeit durch das Ventil (10) einem Differenzdruck zwischen beiden Seiten der Öffnung (15) mit fester Größe entspricht, nämlich demjenigen zwischen der ersten (A) und der zweiten (B) Kammer, und wobei der Differenzdruck der Ausgabe des Elektrizität/Leistung-Wandlers (20) entspricht, und
wobei ein weiterer dritter Durchtritt (31), der ein erstes Überdruckventil (33) enthält, auch die erste (A) und die zweite (B) Kammer verbindet, und wenn der Differenzdruck kleiner als der zu dem ersten Überdruckventil (33) gehörende Überdruck ist, die Durchflußgeschwindigkeit von der Öffnung mit fester Größe derart gesteuert wird, daß sie dem Differenzdruck entspricht, und wenn der Differenzdruck den zu dem ersten Überdruckventil (33) gehörenden Überdruck übersteigt, eine parallel zu der Öffnung (15) mit fester Größe verlaufende Umgehung zwischen der ersten Kammer (A) und der zweiten Kammer (B) durch das erste Überdruckventil (33) gebildet wird.

2. Ventil zur Steuerung eines veränderlichen Durchflusses, das mit einem elektromagnetisch erzeugten Differenzdruck gesteuert wird, nach Anspruch 1, weiterhin mit einer dritten Öffnung (17) in dem Gehäuse (11), einer anderen Öffnung veränderlicher Größe zum Steuern der Verbindung zwischen der ersten Kammer (A) und der dritten Öffnung (17), einem weiteren vierten Durchtritt (32), der die erste (A) und die zweite (B) Kammer verbindet und ein zweites Überdruckventil (34) enthält, das in einer zu derjenigen des ersten Überdruckventils (33) entgegengesetzten Richtung öffnet, wobei die weitere Öffnung veränderlicher Größe und das zweite Überdruckventil (34) die Durchflußgeschwindigkeit zwischen der zweiten Öffnung (16) und der dritten Öffnung (17) steuern, wenn die Beaufschlagung mit der axialen Antriebskraft von dem Elektrizität/Leistung-Wandler (20) in umgekehrter Richtung geschieht.

3. Ventil (10) zum Steuern eines veränderlichen Durchflusses, das mit einem elektromagnetisch erzeugten Differenzdruck gesteuert wird, nach Anspruch 1 oder 2, wobei der die erste (A) und die zweite (B) Kammer verbindende dritte Durchtritt (31) durch den Druckkolben (12) hindurch gebildet ist, wobei sich die Öffnung (15) fester Größe in dem dritten Druchtritt befindet.

4. Ventil (10) zur Steuerung eines veränderlichen Durchflusses, das mit einem elektromagnetisch erzeugten Differenzdruck gesteuert wird, nach Anspruch 3, wobei das erste Überdruckventil (33) in dem dritten Durchtritt (31) zusammen mit der Öffnung (15) fester Größe bereitgestellt ist.

5. Ventil (10) zur Steuerung eines veränderlichen Durchflusses, das mit einem elektromagnetisch erzeugten Differenzdruck gesteuert wird, nach Anspruch 4, wobei das erste Überdruckventil (33) einen Ventilsitz mit einem unvollständig abgedichteten Abschnitt zur Verwendung als Öffnung (15) fester Größe hat.

## Revendications

1. Vanne (10) de commande de débit variable commandée par pression de différence produite par voie électromagnétique, comprenant un boîtier (11) ayant une première ouverture (13) et une seconde ouverture (16), un piston de compression (12) monté à glissement axial dans ledit boîtier (11), des première (A) et seconde (B) chambres définies par les deux extrémités dudit piston à compression (12) et ledit boîtier (11), un convertisseur électricité/puissance (20) pour communiquer audit piston de compression (12) une force d'entraînement axiale correspondant à l'importance de la valeur de commande élèctrique, un ressort (18) pour maintenir ledit piston à compression (12) dans sa position initiale lorsque la valeur de commande électrique audit convertisseur (20) est zéro, un orifice à grandeur variable pour commander la communication entre ladite première chambre (A) et ladite première ouverture (13), un premier passage pour maintenir ladite seconde chambre (B) en communication avec ladite seconde ouverture (16), un second passage reliant lesdites première (A) et seconde (B) chambres comportant un orifice à grandeur fixe (15) à travers lequel, en opération, une pression plus basse que dans l'autre est introduite dans l'une desdites première (A) et seconde (B) chambres,
ledit orifice à grandeur variable étant prévu afin d'être rétréci par ledit mouvement axial dudit piston à compression (12) élargissant l'une desdites première (A) et seconde (B) chambres dans laquelle une pression plus haute est introduite,
le débit à travers la vanne (10) correspondant à une pression de différence entre les deux extrémités dudit orifice à grandeur fixe (15), à savoir celle-ci entre lesdites première (A) et seconde (B) chambres, et ladite différence de pression correspondant à la sortie dudit convertisseur électricité/puissance (20), et
un autre troisième passage (31) comportant une première soupape de surpression (33) relie également lesdites première (A) et seconde (B) chambres et lorsque ladite différence de pression est plus petite que la surpression appartenant à ladite première soupape de surpression (33), le débit est commandé par ledit orifice à grandeur fixe afin qu'il corresponde à ladite pression de différence et lorsque ladite pression de différence dépasse la surpression appartenant à ladite première soupape de surpression (33), une dérivation en parallèle audit premièr orifice à grandeur fixe (15) est formé entre ladite première chambre (A) et ladite seconde chambre (B) à travers ladite première soupape de surpression (33).

2. Vanne (10) de commande de débit variable commandée par pression de différence produite par voie électromagnétique selon la revendication 1, comprenant en outre une troisième ouverture (17) dans le boîtier (11), un autre orifice à grandeur variable pour commander la communication entre ladite première chambre (A) et ladite troisième ouverture (17), un autre quatrième passage (32) reliant lesdites première (A) et seconde (B) chambres comportant une seconde soupape de surpression (34) qui ouvre en sens opposé à ladite première soupape de surpression (33), ledit autre orifice à grandeur variable et ladite seconde soupape de surpression (34) commandant le débit entre ladite seconde ouverture (16) et ladite troisième ouverture (17) lorsque la force d'entraînement axiale est communiquée en sens inverse par ledit convertisseur électricité/puissance (20).

3. Vanne (10) de commande de débit variable commandée par pression de différence produite par voie électromagnétique selon la revendication 1 ou 2, dans laquelle ledit troisième passage (31) reliant lesdites première (A) et seconde (B) chambres est formé à travers ledit piston de compression (12), ledit orifice à grandeur fixe (15) étant prévu dans ledit troisième desdits passages.

4. Vanne (10) de commande de débit variable commandée par pression de différence produite par voie électromagnétique selon la revendication 3, dans laquelle ladite première soupape de surpression (33) est prévue dans ledit troisième passage (31) conjointement avec ledit orifice à grandeur fixe (15).

5. Vanne (10) de commande de débit variable commandée par pression de différence produite par voie électromagnétique selon la revendication 4, dans laquelle ladite première soupape de surpression (33) possède un siège de soupape ayant une partie d'étanchéité imparfaite qui sert d'orifice à grandeur fixe (15).
